# EUROPEAN PATENT APPLICATION

(11) **EP 4 046 854 A1**
(43) Date of publication of application: **24.08.2022**
(21) Application number: 22152857.3
(22) Date of filing: 24.01.2022
(51) Int. Cl.: B60L 8/00, B60L 3/00

(54) **POWER GENERATION CONTROL DEVICE, VEHICLE, POWER GENERATION CONTROL METHOD, AND STORAGE MEDIUM**

(30) Priority: 19.02.2021 JP 2021025671
(71) Applicant: TOYOTA JIDOSHA KABUSHIKI KAISHA, Toyota-shi, Aichi-ken, 471-8571 (JP)
(72) Inventor: FUKAI, Takashi, Toyota-shi, 471-8571 (JP); TAKAHASHI, Masahiro, Toyota-shi, 471-8571 (JP); MIYAMOTO, Yuma, Toyota-shi, 471-8571 (JP); KAWAMURA, Akinori, Toyota-shi, 471-8571 (JP)
(74) Representative: J A Kemp LLP

(57) **Abstract**

A power generation control device includes: a first DC-DC converter including an input side to which a solar panel mounted on a vehicle is connected; a second DC-DC converter including an input side to which an output side of the first DC-DC converter is connected and an output side to which a drive battery for driving the vehicle is connected; a third DC-DC converter including an input side to which the output side of the first DC-DC converter is connected and an output side to which an auxiliary battery for supplying power to accessories of the vehicle is connected; a memory; and a processor coupled to the memory, the processor being configured to control an output power of either the second DC-DC converter or the third DC-DC converter so that a voltage on the output side of the first DC-DC converter becomes a predetermined value.

## Description

### BACKGROUND

### Technical Field

The present disclosure relates to a power generation control device, a vehicle, a power generation control method, and a non-transitory storage medium in which a control program is stored.

### Related Art

Japanese Patent Application Laid-open (JP-A) No. 2020-089100 discloses a vehicle-mounted solar power generation system where power generated by a solar panel is supplied to any of a drive battery, an auxiliary battery, and a solar battery in accordance with the state of the vehicle.

When charging the drive battery and the auxiliary battery with the power generated by the solar panel, the system of JP-A No. 2020-089100 may stably supply power to the drive battery and the auxiliary battery by performing step-up/down control using the voltage of the solar battery as a reference voltage. However, if the solar battery is done away with to cut costs, a reference voltage needs to be created between the solar panel and each battery to realize efficiency charging of the drive battery and the auxiliary battery based on the fluctuating power supplied from the solar panel.

### SUMMARY

The present disclosure provides a power generation control device that creates a reference voltage between a solar panel and batteries to enable efficient powering of the batteries; a vehicle; a power generation control method; and a non-transitory storage medium in which a control program is stored.

A first aspect of the disclosure is a power generation control device including: a first DC-DC converter including an input side to which a solar panel mounted on a vehicle is connected; a second DC-DC converter including an input side to which an output side of the first DC-DC converter is connected and an output side to which a drive battery for driving the vehicle is connected; a third DC-DC converter including an input side to which the output side of the first DC-DC converter is connected and an output side to which an auxiliary battery for supplying power to accessories of the vehicle is connected; a memory; and a processor coupled to the memory, the processor being configured to control an output power of either the second DC-DC converter or the third DC-DC converter so that a voltage on the output side of the first DC-DC converter becomes a predetermined value.

The power generation control device of the first aspect includes the first DC-DC converter, the second DC-DC converter, and the third DC-DC converter. In this power generation control device, the solar panel, the first DC-DC converter, the second DC-DC converter, and the drive battery are connected in this order going from the solar panel to the drive battery. Furthermore, the solar panel, the first DC-DC converter, the third DC-DC converter, and the auxiliary battery are connected in this order going from the solar panel to the auxiliary battery. Here, the control unit controls the output power so that the voltage on the output side of the first DC-DC converter, which is the supplier of power to the drive battery and the auxiliary battery, becomes a predetermined value. Namely, according to this power generation control device, by creating a reference voltage between the solar panel and each battery, efficient powering may be provided to each battery.

The power generation control device of the first aspect may further include a capacitor including one terminal connected to the output side of the first DC-DC converter and another terminal connected to a ground of the vehicle.

In this configuration, the capacitor is provided between the output side of the first DC-DC converter, which is the supplier of power to the drive battery and the auxiliary battery, and the ground. For that reason, according to this power generation control device, by providing the capacitor, fluctuations in the reference voltage caused by fluctuations in the power generated by the solar panel may be inhibited.

In the power generation control device of the first aspect, when the vehicle is in motion, the processor may control the output power of the third DC-DC converter so that the voltage becomes a predetermined value.

According to this configuration, when the vehicle is in motion, efficient powering may be provided to the auxiliaries (accessories).

In the power generation control device of the first aspect, in a case in which the vehicle is stopped and charging based on power from the solar panel is in preparation, the processor may stop controlling the second DC-DC converter and control the output power of the third DC-DC converter so that the voltage becomes a predetermined value.

According to this configuration, when the vehicle is stopped and charging to check the charged state of the solar panel is in preparation, efficient powering may be provided to the auxiliaries (accessories).

In the power generation control device of the first aspect, when the drive battery is being charged based on power from the solar panel, the processor may control the output power of the second DC-DC converter so that the voltage becomes a predetermined value.

According to this configuration, by controlling the voltage of the second DC-DC converter to a predetermined value when the drive battery is being charged, efficient powering may be provided from the third DC-DC converter to the accessories.

A second aspect of the disclosure is a vehicle including the power generation control device of the first aspect, the solar panel that is installed on a vehicle body exterior, the drive battery that is provided in the vehicle body, and the auxiliary battery that is provided in the vehicle body.

In the vehicle of the second aspect, by creating a reference voltage between the solar panel and each battery, efficient powering may be provided to each battery of the vehicle.

A third aspect of the disclosure is a power generation control method of controlling a first DC-DC converter including an input side to which a solar panel mounted on a vehicle is connected, a second DC-DC converter including an input side to which an output side of the first DC-DC converter is connected and an output side to which a drive battery for driving the vehicle is connected, and a third DC-DC converter including an input side to which the output side of the first DC-DC converter is connected and an output side to which an auxiliary battery for supplying power to accessories of the vehicle is connected, the method including: controlling an output power of either the second DC-DC converter or the third DC-DC converter so that a voltage on the output side of the first DC-DC converter becomes a predetermined value.

The power generation control method of the third aspect is a method of controlling the first DC-DC converter, the second DC-DC converter, and the third DC-DC converter. In the vehicle in which the power generation control method is executed, the solar panel, the first DC-DC converter, the second DC-DC converter, and the drive battery are connected in this order going from the solar panel to the drive battery. Furthermore, the solar panel, the first DC-DC converter, the third DC-DC converter, and the auxiliary battery are connected in this order going from the solar panel to the auxiliary battery. In this power generation control method, the output power is controlled by the computer so that the voltage on the output side of the first DC-DC converter, which is the supplier of power to the drive battery and the auxiliary battery, becomes a predetermined value. Namely, according to this power generation control method, by creating a reference voltage between the solar panel and each battery, efficient powering may be provided to each battery.

A fourth aspect of the disclosure is a non-transitory storage medium storing a program causing a computer to execute a power generation control process in a vehicle, the vehicle including a first DC-DC converter including an input side to which a solar panel mounted on a vehicle is connected, a second DC-DC converter including an input side to which an output side of the first DC-DC converter is connected and an output side to which a drive battery for driving the vehicle is connected, and a third DC-DC converter including an input side to which the output side of the first DC-DC converter is connected and an output side to which an auxiliary battery for supplying power to accessories of the vehicle is connected, the power generation control process including: controlling an output power of either the second DC-DC converter or the third DC-DC converter so that a voltage on the output side of the first DC-DC converter becomes a predetermined value..

The fourth aspect is a non-transitory storage medium in which is stored a program that controls the first DC-DC converter, the second DC-DC converter, and the third DC-DC converter. In the vehicle in which this control process is executed, the solar panel, the first DC-DC converter, the second DC-DC converter, and the drive battery are connected in this order going from the solar panel to the drive battery. Furthermore, the solar panel, the first DC-DC converter, the third DC-DC converter, and the auxiliary battery are connected in this order going from the solar panel to the auxiliary battery. In this control process, the computer controls the output power so that the voltage on the output side of the first DC-DC converter, which is the supplier of power to the drive battery and the auxiliary battery, becomes a predetermined value. Namely, according to this control process, by creating a reference voltage between the solar panel and each battery, efficient powering may be provided to each battery.

According to the present disclosure, by creating a reference voltage between the solar panel and the batteries, efficient powering may be provided to the batteries.

### BRIEF DESCRIPTION OF THE DRAWINGS

Examples of embodiments of the disclosure will be described in detail below with reference to the following drawings:
FIG. 1 is a schematic configuration diagram of a vehicle and a power generation control system pertaining to a first embodiment;
FIG. 2 is a block diagram showing the configuration of a ROM in a control unit of the first embodiment;
FIG. 3 is a drawing describing a condition table in the first embodiment;
FIG. 4 is a block diagram showing functional configurations of a CPU in the control unit of the first embodiment;
FIG. 5 is a flowchart showing the flow of a power control process in the first embodiment;
FIG. 6 is a flowchart showing the flow of a monitoring process in the first embodiment; and
FIG. 7 is a flowchart showing the flow of a gain correction process in the first

### embodiment.

### DETAILED DESCRIPTION

### (First Embodiment)

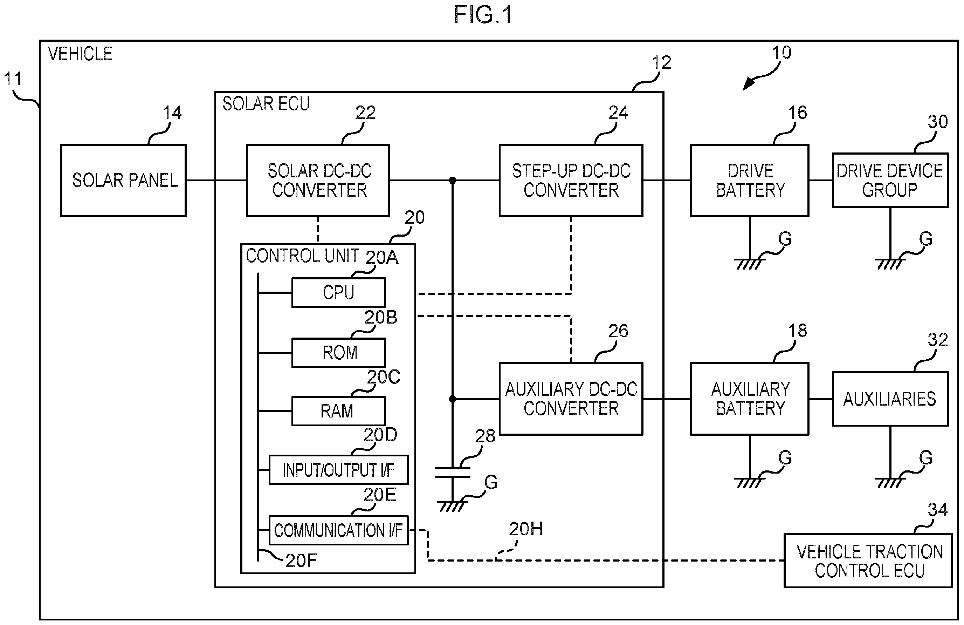

As shown in FIG. 1, a power generation control system 10 of a first embodiment is mounted in a vehicle 11. The vehicle 11 is, for example, an electric vehicle (EV) or a hybrid vehicle (HV). The vehicle 11 of this embodiment is equipped with a solar panel 14 and is able to power, with power generated by the solar panel 14, a drive device group 30 and auxiliaries (accessories) 32 of the vehicle 11. Furthermore, in this embodiment, the vehicle 11 may charge, with the power generated by the solar panel 14, a drive battery 16 and an auxiliary battery 18 described later.

The power generation control system 10 includes a solar ECU 12 serving as a power generation control device, the solar panel 14, the drive battery 16, and the auxiliary battery 18. The solar ECU 12 has the function of controlling the power generated by the solar panel 14. Details about the solar ECU 12 will be described later.

The solar panel 14 is a photovoltaic module, which is a power generation device that generates power when it is irradiated with sunlight. The solar panel 14 is, for example, installed on the roof that is an exterior of the vehicle 11. The solar panel 14 is connected to a later-described solar DC-DC converter 22 provided in the solar ECU 12.

The drive battery 16 is a high-voltage battery for allowing the drive device group, including a traction motor pertaining to the driving of the vehicle 11, to operate, and is configured by a rechargeable secondary battery such as a lithium battery or a nickel-hydrogen battery, for example. The drive battery 16 is connected to a later-described step-up DC-DC converter 24 provided in the solar ECU 12 and is supplied with power from the step-up DC-DC converter 24. Furthermore, the drive battery 16 is connected to the traction motor via a power control unit configuring the drive device group 30, supplies power to the traction motor when the vehicle 11 accelerates, and is supplied with power from the traction motor when the vehicle 11 decelerates.

The auxiliary battery 18 is a battery that allows the accessories 32 other than devices pertaining to the driving of the vehicle 11 to operate, and is configured by a rechargeable secondary battery such as a lithium ion battery or a lead storage battery, for example. The auxiliary battery 18 is connected to a later-described auxiliary DC-DC converter 26 provided in the solar ECU 12, and is supplied with power from the auxiliary DC-DC converter 26. Furthermore, the auxiliary battery 18 is connected to the accessories 32 of the vehicle 11 and supplies power to the accessories 32.

The solar ECU 12 is provided between the solar panel 14 and the drive battery 16 and auxiliary battery 18 and has the function of supplying the power generated by the solar panel 14 to the drive battery 16 and the auxiliary battery 18. The solar ECU 12 includes a control unit 20, a solar DC-DC converter 22, a step-up DC-DC converter 24, an auxiliary DC-DC converter 26, and a capacitor 28. The solar DC-DC converter 22 is an example of a first DC-DC converter, the step-up DC-DC converter 24 is an example of a second DC-DC converter, and the auxiliary DC-DC converter 26 is an example of a third DC-DC converter.

The solar DC-DC converter 22 has the function of supplying the power generated by the solar panel 14 to the step-up DC-DC converter 24 and the auxiliary DC-DC converter 26. The solar DC-DC converter 22 has an input side to which the solar panel 14 is connected and an output side to which the step-up DC-DC converter 24 and the auxiliary DC-DC converter 26 are connected. When supplying power, the solar DC-DC converter 22 converts (steps up / steps down) the voltage generated by the solar panel 14, which is the input voltage, to a predetermined voltage based on an instruction from the control unit 20 and outputs the converted voltage to the step-up DC-DC converter 24 and the auxiliary DC-DC converter 26.

The step-up DC-DC converter 24 has the function of supplying the power output by the solar DC-DC converter 22 to the drive battery 16. The step-up DC-DC converter 24 has an input side to which the solar DC-DC converter 22 is connected and an output side to which the drive battery 16 is connected. When supplying power, the step-up DC-DC converter 24 converts (steps up) the output voltage of the solar DC-DC converter 22, which is the input voltage, to a predetermined voltage based on an instruction from the control unit 20 and outputs the converted voltage to the drive battery 16.

The auxiliary DC-DC converter 26 has the function of supplying the power output by the solar DC-DC converter 22 to the auxiliary battery 18. The auxiliary DC-DC converter 26 has an input side to which the solar DC-DC converter 22 is connected and an output side to which the auxiliary battery 18 is connected. When supplying power, the auxiliary DC-DC converter 26 converts (steps down) the output voltage of the solar DC-DC converter 22, which is the input voltage, to a predetermined voltage based on an instruction from the control unit 20 and outputs the converted voltage to the auxiliary battery 18.

The capacitor 28 is inserted between the output side of the solar DC-DC converter 22 and a ground G. Assuming that the voltage in the intermediate section between the solar panel 14 and the drive battery 16 and auxiliary battery 18 is an intermediate voltage V, the capacitor 28 inhibits fluctuations in the intermediate voltage V caused by fluctuations in the power generated by the solar panel 14. The intermediate voltage V is the voltage on the output side of the solar DC-DC converter 22 and the input sides of the step-up DC-DC converter 24 and the auxiliary DC-DC converter 26. Namely, the intermediate voltage V serves as a reference voltage when charging the drive battery 16 and the auxiliary battery 18.

The control unit 20 is configured by a microcomputer, for example, and has the function of controlling the solar DC-DC converter 22, the step-up DC-DC converter 24, and the auxiliary DC-DC converter 26. Because of this, the control unit 20 powers the drive battery 16 and the auxiliary battery 18, and charges the drive battery 16 and the auxiliary battery 18, with the power (voltage, current) generated by the solar panel 14.

The control unit 20 includes a central processing unit (CPU) 20A, a read-only memory (ROM) 20B, a random-access memory (RAM) 20C, an input/output interface (I/F) 20D, and a communication I/F 20E. The CPU 20A, the ROM 20B, the RAM 20C, the input/output I/F 20D, and the communication I/F 20E are communicably connected to each other via an internal bus 20F.

The CPU 20A is a central processing unit, executes various types of programs, and controls each part of the control unit 20. That is, the CPU 20A reads programs from the ROM 20B and executes the programs using the RAM 20C as a workspace.

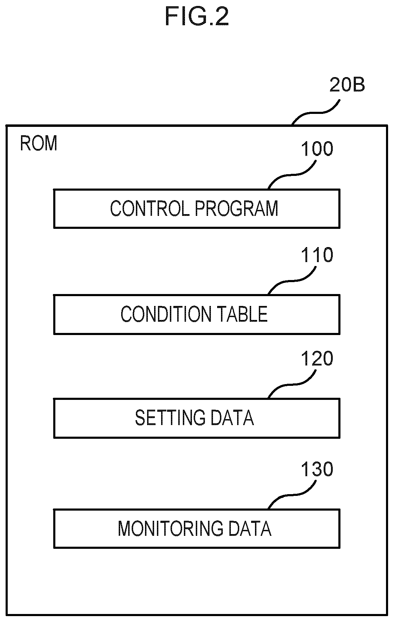

The ROM 20B stores various types of programs and various types of data. As shown in FIG. 2, in the ROM 20B of this embodiment are stored a control program 100, a condition table 110, setting data 120, and monitoring data 130.

The control program 100 is a program for controlling the control unit 20. The control unit 20 controlled by the control program controls the solar DC-DC converter 22, the step-up DC-DC converter 24, and the auxiliary DC-DC converter 26.

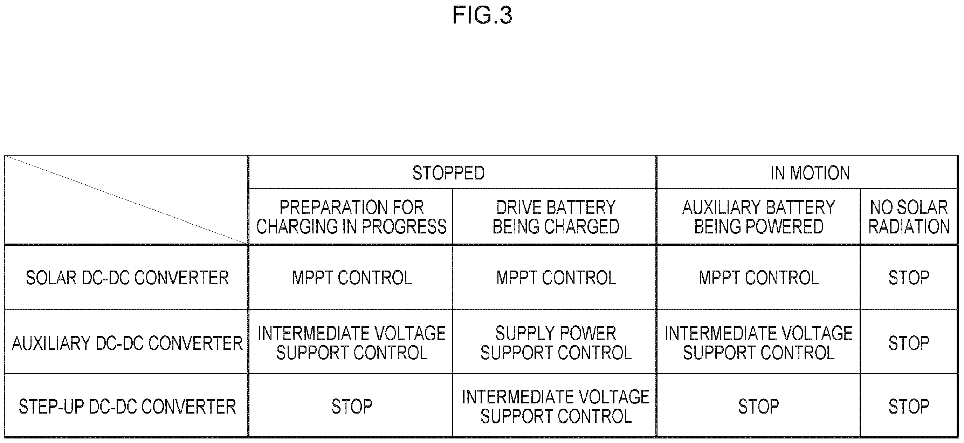

The condition table 110 is a table in which are stored conditions for controlling the solar DC-DC converter 22, the step-up DC-DC converter 24, and the auxiliary DC-DC converter 26. As shown in FIG. 3, in the condition table 110 are stored plural control conditions according to moving states and powering states of the vehicle 11.

Specifically, the moving states include the divisions of "Stopped" and "In Motion" for the vehicle 11. The powering states are plurally set in accordance with the moving states. First, powering states when the vehicle is stopped include "Preparation for charging in Progress," which indicates that charging using the solar panel 14 is in preparation, and "Drive Battery being Charged," in which the drive battery 16 is being charged. Furthermore, powering states when the vehicle is in motion include "Auxiliary Battery being Powered," in which the auxiliary battery is being powered, and "No Solar Radiation," which indicates that there is no solar radiation and powering is stopped.

Here, the solar DC-DC converter 22 is regulated to perform maximum power point tracking (MPPT) control in each of the powering states of "Preparation for charging in Progress," "Drive Battery being Charged," and "Auxiliary Battery being Powered" except "No Solar Radiation." MPPT control is control that finds the optimal current value and voltage value with which output is maximized when the solar panel 14 generates power.

Furthermore, the step-up DC-DC converter 24 is regulated to perform intermediate voltage support control in the "Drive Battery being Charged" powering state and stop control in other powering states. The intermediate voltage support control is control that adjusts the power output from the DC-DC converter so that the intermediate voltage V is kept at a predetermined voltage value. Namely, the intermediate voltage support control is feedback control whose input value is voltage (the intermediate voltage V) and whose manipulated value is power.

Furthermore, the auxiliary DC-DC converter 26 is regulated to perform intermediate voltage support control in the "Preparation for charging" and "Auxiliary Battery being Powered" powering states, perform supply power support control in the "Drive Battery being Charged" powering state, and stop control in the "No Solar Radiation" powering state. The supply power support control is control that adjusts the power output from the DC-DC converter to be kept constant. Namely, the supply power support control is feedback control whose input value and manipulated value are power.

As shown in FIG. 2, the setting data 120 store gain values of proportional (P) gain, integral (I) gain, and differential (D) gain, which are control parameters in PID control serving as the intermediate voltage support control. The setting data 120 store the gain values of the step-up DC-DC converter 24 and the auxiliary DC-DC converter 26 to which the intermediate voltage support control is applied.

The monitoring data 130 are data in which is stored the intermediate voltage V that is fed back in the intermediate voltage support control.

As shown in FIG. 1, the RAM 20C temporarily stores programs or data as a workspace.

The input/output I/F 20D is an interface for communicating with the solar DC-DC converter 22, the step-up DC-DC converter 24, and the auxiliary DC-DC converter 26 that the solar ECU 12 has.

The communication I/F 20E is an interface for connecting to a vehicle traction control ECU 34 that controls the moving of the vehicle 11. The interface uses a communication standard based on the CAN protocol, for example. The communication I/F 20E is connected to an external bus 20H. In this regard, the vehicle traction control ECU 34 connected to the communication I/F 20E is not limited to one ECU and may also include plural ECUs. Furthermore, the communication I/F 20E may also be connected to a communication module using a communication standard such as 5G, LTE, or Wi-Fi (registered trademark), for example. This allows data about the intermediate voltage V to be sent to a device external to the vehicle 11.

The control unit 20 may also include a storage serving as a storage unit in addition to or instead of the ROM 20B. The storage is configured by a hard disk drive (HDD) or a solid-state drive (SSD), for example.

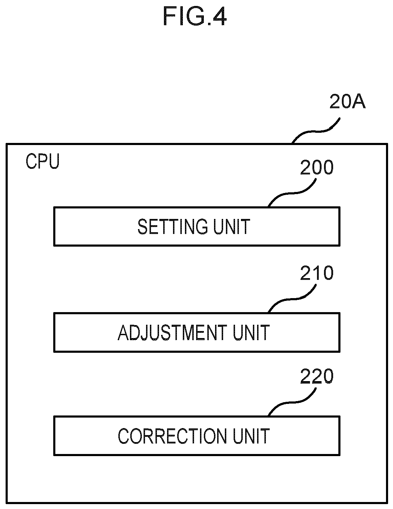

As shown in FIG. 4, in the control unit 20 of this embodiment, the CPU 20A functions as a setting unit 200, an adjustment unit 210, and a correction unit 220 as a result of executing the control program 100.

The setting unit 200 has the function of setting the method of controlling the solar DC-DC converter 22, the step-up DC-DC converter 24, and the auxiliary DC-DC converter 26. Specifically, the setting unit 200 sets the control method corresponding to the moving state and the powering state of the vehicle 11 acquired with reference to the condition table 110.

The adjustment unit 210 has the function of adjusting the outputs of each of the solar DC-DC converter 22, the step-up DC-DC converter 24, and the auxiliary DC-DC converter 26 based on the control method set by the setting unit 200. In particular, when the step-up DC-DC converter 24 and the auxiliary DC-DC converter 26 perform the intermediate voltage support control, the adjustment unit 210 adjusts the intermediate voltage V to a predetermined target value based on each of the gain values.

The correction unit 220 has the function of correcting each of the gain values of the P gain, the I gain, and the D gain stored in the setting data 120. The correction unit 220 executes correction starting after a predetermined period of time elapses since the last time the correction unit 220 executed correction.

### (Control Flows)

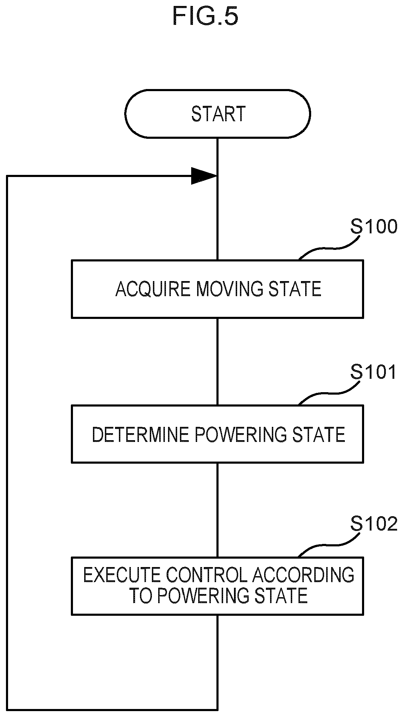

Flows of processes executed in the control unit 20 of this embodiment will be described using the flowcharts of FIG. 5 to FIG. 7. The processes in the control unit 20 are realized as a result of the CPU 20A functioning as the setting unit 200, the adjustment unit 210, and the correction unit 220.

First, the power control process of FIG. 5 will be described.

In step S100 of FIG. 5, the CPU 20A acquires the moving state. Specifically, the CPU 20A acquires the moving state of the vehicle 11 from the vehicle traction control ECU 34.

In step S101 the CPU 20A determines the powering state based on the moving state it has acquired. Specifically, the CPU 20A references the condition table 110 to determine whether the powering state is (1) "Preparation for charging in Progress" in a case where the moving state is "Stopped," (2) "Drive Battery being Charged" in a case where the moving state is "Stopped," (3) "Auxiliary Battery being Powered" in a case where the moving state is "In Motion," or (4) "No Solar Radiation" in a case where the moving state is "In Motion."

In step S102, the CPU 20A executes control according to the determined powering state. That is, the CPU 20A executes control of the solar DC-DC converter 22, the step-up DC-DC converter 24, and the auxiliary DC-DC converter 26 in accordance with the powering state. Then, the CPU 20A returns to step S100.

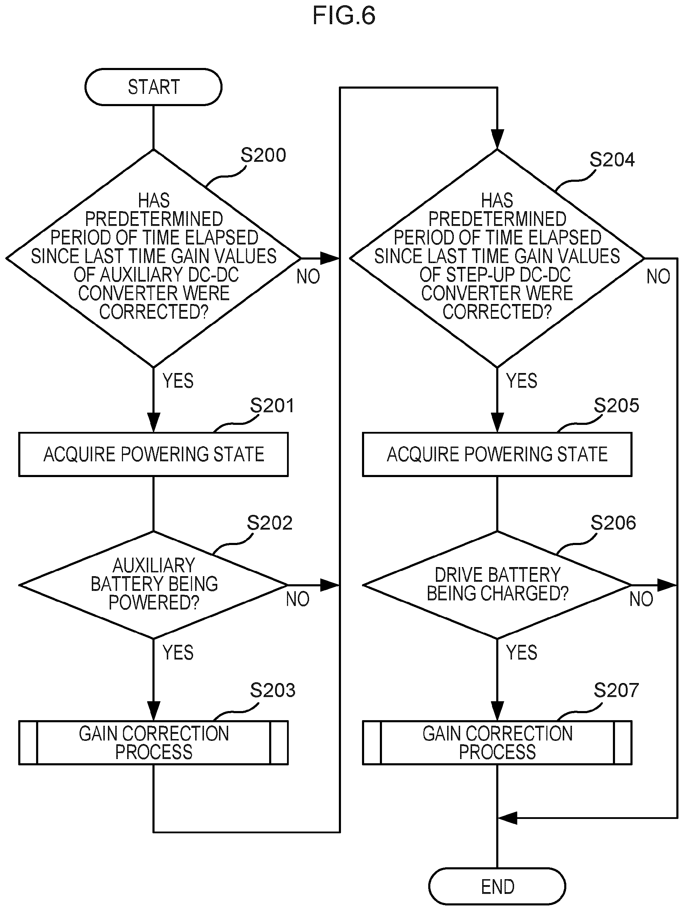

Next, the monitoring process of FIG. 6 will be described. In the monitoring process, the CPU 20A determines whether or not to correct the gain values and executes a process pertaining to correction in the order of the auxiliary DC-DC converter 26 and the step-up DC-DC converter 24.

First, in step S200 of FIG. 6, the CPU 20A determines whether or not a predetermined period of time has elapsed since the CPU 20A last corrected the gain values of the auxiliary DC-DC converter 26. The CPU 20A proceeds to step S201 in a case in which it is determined that the predetermined period of time has elapsed (YES in step S200). The CPU 20A proceeds to step S204 in a case in which it is determined that the predetermined period of time has not elapsed (NO in step S200).

In step S201 the CPU 20A acquires the powering state.

In step S202 the CPU 20A determines whether or not the powering state is "Auxiliary Battery being Powered" in which the accessories 32 and the auxiliary battery 18 are being powered. The CPU 20A proceeds to step S203 in a case in which it is determined that the powering state is "Auxiliary Battery being Powered" (YES in step S202). The CPU 20A proceeds to step S204 in a case in which it is determined that the powering state is not "Auxiliary Battery being Powered" (NO in step S202).

In step S203 the CPU 20A executes a gain correction process. Details of the gain correction process will be described later.

In step S204 the CPU 20A determines whether or not a predetermined period of time has elapsed since the CPU 20A last corrected the gain values of the step-up DC-DC converter 24. The CPU 20A proceeds to step S205 in a case in which it is determined that the predetermined period of time has elapsed (YES in step S204). The CPU 20A ends the monitoring process in a case in which it is determined that the predetermined period of time has not elapsed (NO in step S204).

In step S205 the CPU 20A acquires the powering state.

In step S206 the CPU 20A determines whether or not the powering state is "Drive Battery being Charged" in which the drive battery 16 is being charged. The CPU 20A proceeds to step S207 in a case in which it is determined that the powering state is "Drive Battery being Charged" (YES in step S206). The CPU 20A ends the monitoring process in a case in which it is determined that the powering state is not "Drive Battery being Charged" (NO in step S206).

In step S207 the CPU 20A executes a gain correction process. Details about the gain correction process will be described later. Then, the CPU 20A ends the monitoring process.

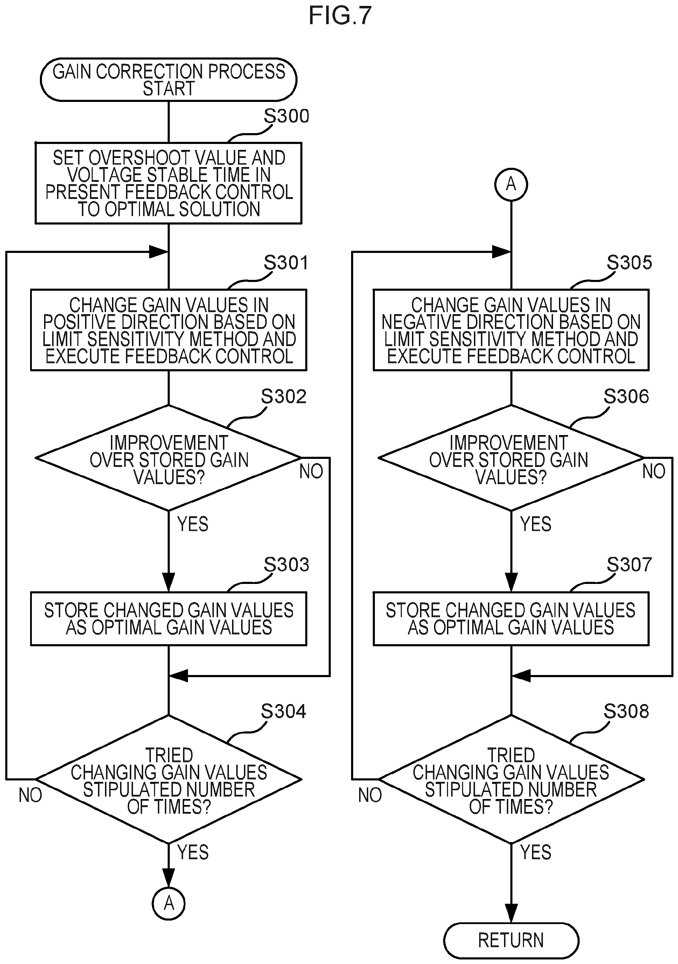

Next, the gain correction process of FIG. 7 will be described.

In step S300 of FIG. 7, the CPU 20A sets to an optimal solution the overshoot value and the voltage stable time in the present feedback control.

In step S301 the CPU 20A changes the gain values in a positive direction based on the limit sensitivity method and executes feedback control.

In step S302 the CPU 20A determines whether or not the overshoot value and the voltage stable time have been improved over what they were with the gain values stored in the ROM 20B. The CPU 20A proceeds to step S303 in a case in which it is determined that the overshoot value and the voltage stable time have been improved. The CPU 20A proceeds to step S304 in a case in which it is determined that the overshoot value and the voltage stable time have not been improved.

In step S303 the CPU 20A stores, as optimal gain values in the ROM 20B, the gain values after being changed in step S301.

In step S304 the CPU 20A determines whether or not it has tried changing the gain values a prescribed number of times. Specifically, the CPU 20A determines whether or not it has executed the processes of step S301 to step S303 a prescribed number of times. The CPU 20A proceeds to step S305 in a case in which it is determined that it has tried changing the gain values the prescribed number of times. The CPU 20A returns to step S301 in a case in which it is determined that it has not tried changing the gain values the prescribed number of times.

In step S305 the CPU 20A changes the gain values in a negative direction based on the limit sensitivity method and executes feedback control.

In step S306 the CPU 20A determines whether or not the overshoot value and the voltage stable time have been improved over what they were with the gain values stored in the ROM 20B. The CPU 20A proceeds to step S307 in a case in which it is determined that the overshoot value and the voltage stable time have been improved. The CPU 20A proceeds to step 308 in a case in which it is determined that the overshoot value and the voltage stable time have not been improved.

In step S307 the CPU 20A stores, as optimal gain values in the ROM 20B, the gain values after being changed in step S305.

In step S308 the CPU 20A determines whether or not it has tried changing the gain values a prescribed number of times. Specifically, the CPU 20A determines whether or not it has executed the processes of step S305 to step S307 a prescribed number of times. The CPU 20A ends the gain correction process and returns to the monitoring process in a case in which it is determined that it has tried changing the gain values the prescribed number of times. The CPU 20A returns to step S305 in a case in which it is determined that it has not tried changing the gain values the prescribed number of times.

### (Summary of Embodiment)

The solar ECU 12 of this embodiment includes the solar DC-DC converter 22, the step-up DC-DC converter 24, and the auxiliary DC-DC converter 26. In this solar ECU 12, the solar panel 14, the solar DC-DC converter 22, the step-up DC-DC converter 24, and the drive battery 16 are connected in this order going from the solar panel 14 to the drive battery 16. Furthermore, the solar panel 14, the solar DC-DC converter 22, the auxiliary DC-DC converter 26, and the auxiliary battery 18 are connected in this order going from the solar panel 14 to the auxiliary battery 18.

In this embodiment, the control unit 20 controls the intermediate voltage V on the output side of the solar DC-DC converter 22 and on the input sides of the step-up DC-DC converter 24 and the auxiliary DC-DC converter 26 by performing the intermediate voltage support control. That is, the control unit 20 controls the output power so that the reference voltage on the output side of the solar DC-DC converter 22, which is the supplier of power to the drive battery 16 and the auxiliary battery 18, being a predetermined target value.

Here, whether the control unit 20 performs the intermediate voltage support control with respect to either of the step-up DC-DC converter 24 and the auxiliary DC-DC converter 26 is determined in accordance with the powering state based on the condition table 110. According to this embodiment, a reference voltage may be created between the solar panel 14 and each battery. Because of this, in the step-up DC-DC converter 24, the step-up ratio of the voltage may be kept constant and efficient powering of the drive battery 16 may be realized. Furthermore, in the auxiliary DC-DC converter 26, the high-voltage ratio of the voltage may be kept constant and efficient powering to the auxiliary battery 18 may be realized.

In particular, according to this embodiment, efficient powering may be provided to the accessories 32 as a result of the control unit 20 performing the intermediate voltage support control with respect to the auxiliary DC-DC converter 26 while the vehicle 11 is in motion. Furthermore, when the vehicle 11 is stopped and preparation for charging to check the charged state of the solar panel 14 is in progress, efficient powering may be provided to the accessories 32 as a result of the control unit 20 performing the intermediate voltage support control with respect to the auxiliary DC-DC converter 26.

At the same time, according to this embodiment, when the drive battery 16 is being charged, efficient powering may be provided from the auxiliary DC-DC converter 26 to the accessories 32 as a result of the control unit 20 performing the intermediate voltage support control with respect to the step-up DC-DC converter 24.

Additionally, according to this embodiment, in a transitional situation accompanying fluctuations in the power supplied from the solar panel 14, overshooting and oscillation of the intermediate voltage V may be handled without mounting a solar battery.

Furthermore, in the solar ECU 12 of this embodiment, the adjustment unit 210 executes PID control as the intermediate voltage support control. Specifically, the adjustment unit 210 uses feedback control based on each gain value in PID control to adjust the step-up DC-DC converter 24 or the auxiliary DC-DC converter 26 to keep the intermediate voltage V constant. Additionally, according to this embodiment, the correction unit 220 corrects the gain values that are control parameters per DC-DC converter, so that power loss during charging may be inhibited per battery.

The gain values may become unsuitable due to a reduction in capacity caused by aging of the capacitor 28, individual variation, degradation of the solar panel 14, and degradation of circuit elements over time. In contrast, according to this embodiment, quality in the battery charging operation may be ensured by executing correction of the gain values every predetermined period of time.

### (Second Embodiment)

In the first embodiment, the correction unit 220 is configured to execute correction of the gain values that are control parameters starting after the predetermined period of time elapses, but the trigger for starting executing of correction is not limited to this. In a second embodiment, the correction unit 220 is configured to execute correction starting when the waveform of the intermediate voltage V during feedback control deviates from its proper state.

Specifically, the CPU 20A of the control unit 20 monitors the waveform of the intermediate voltage V during feedback control and executes the gain correction process after the waveform deviates from its proper state. Here, the proper state of the waveform is, for example, a state in which the overshoot value and the voltage stable time satisfy preset values. That is, in this embodiment, the CPU 20A executes correction of the gain values when, in the feedback control in the intermediate voltage support control, the intermediate voltage V has excessively overshot the target value and does not converge on the target value.

According to this embodiment, quality in the battery charging operation may be ensured by executing correction of the gain values when the waveform of the intermediate voltage V during feedback control deviates from its proper state.

### (Modification Example)

As a modification example of the second embodiment, whether or not the parameters need to be corrected may be determined by a device external to the vehicle 11. In this modification example, a data communication module (DCM) that is a communication module is connected directly or via another ECU to the communication I/F 20E, thereby allowing the waveform of the intermediate voltage V to be sent to a server external to the vehicle 11. For example, when a server managed by a dealer acquires the waveform of the intermediate voltage V of the vehicle 11, the dealer may determine whether or not the gain values need to be corrected. If the dealer determines that the gain values need to be corrected, the dealer may implement correction of the gain values by leading the user of the vehicle 11 to park at the dealer.

According to this modification example, since the external server monitors the state of feedback of the intermediate voltage V, unsuitability of the gain values caused by degradation of circuit elements over time may be remotely discovered. Furthermore, by providing a function to notify the user of the vehicle 11, the dealer may implement a check of hardware faults other than unsuitableness of the gain values.

It will be noted that various types of processors other than a CPU may also execute the various types of processes that the CPU 20A executed by reading software (programs) in the above embodiments. Examples of processors in this case include programmable logic devices (PLDs) whose circuit configuration may be changed after manufacture, such as field-programmable gate arrays (FPGAs), and dedicated electrical circuits that are processors having a circuit configuration dedicatedly designed for executing specific processes, such as application-specific integrated circuits (ASICs). Furthermore, the processes described above may be executed by one of these various types of processors or may be executed by a combination of two or more processors of the same type or different types (e.g., plural FPGAs, and a combination of a CPU and an FPGA, etc.). Furthermore, the hardware structures of these various types of processors are more specifically electrical circuits in which circuit elements such as semiconductor elements are combined.

Furthermore, in the above embodiments, each of the programs was described as being stored (installed) beforehand in a computer-readable non-transitory storage medium. For example, the control program 100 in the control unit 20 is stored beforehand in the ROM 20B. However, the programs are not limited to this and may also be provided in a form in which they are stored in non-transitory storage media such as a compact disc read-only memory (CD-ROM), a digital versatile disc read-only memory (DVD-ROM), and a universal serial bus (USB) memory. Furthermore, the programs may also take a form in which they are downloaded via a network from an external device.

The process flows described in the above embodiments are also examples, and unnecessary steps may be deleted, new steps may be added, and process orders may also be changed in a range that does not depart from the spirit of the disclosure.

## Claims

1. A power generation control device (12) comprising:
a first DC-DC converter (22) including an input side to which a solar panel (14) mounted on a vehicle (11) is connected;
a second DC-DC converter (24) including an input side to which an output side of the first DC-DC converter (22) is connected and an output side to which a drive battery (16) for driving the vehicle (11) is connected;
a third DC-DC converter (26) including an input side to which the output side of the first DC-DC converter (22) is connected and an output side to which an auxiliary battery (18) for supplying power to accessories (32) of the vehicle (11) is connected;
a memory (20B, 20C); and
a processor (20A) coupled to the memory (20B, 20C), the processor (20A) being configured to
control an output power of either the second DC-DC converter (24) or the third DC-DC converter (26) so that a voltage on the output side of the first DC-DC converter (22) becomes a predetermined value.

2. The power generation control device (12) of claim 1, further comprising a capacitor (28) including one terminal connected to the output side of the first DC-DC converter (22) and another terminal connected to a ground of the vehicle (11).

3. The power generation control device (12) of claim 1 or 2, wherein, when the vehicle (11) is in motion, the processor (20A) is configured to control the output power of the third DC-DC converter (26) so that the voltage becomes a predetermined value.

4. The power generation control device (12) of any one of claims 1 to 3, wherein, in a case in which the vehicle (11) is stopped and charging based on power from the solar panel (14) is in preparation, the processor (20A) is configured to stop controlling the second DC-DC converter (24) and control the output power of the third DC-DC converter (26) so that the voltage becomes a predetermined value.

5. The power generation control device (12) of any one of claims 1 to 4, wherein, when the drive battery (16) is being charged based on power from the solar panel (14), the processor (20A) is configured to control the output power of the second DC-DC converter (24) so that the voltage becomes a predetermined value.

6. A vehicle (11) comprising:
the power generation control device (12) of any one of claims 1 to 5;
the solar panel (14) that is installed on a vehicle body exterior;
the drive battery (16) that is provided in the vehicle body; and
the auxiliary battery (18) that is provided in the vehicle body.

7. A power generation control method of controlling a first DC-DC converter (22) including an input side to which a solar panel (14) mounted on a vehicle (11) is connected, a second DC-DC converter (24) including an input side to which an output side of the first DC-DC converter (22) is connected and an output side to which a drive battery (16) for driving the vehicle (11) is connected, and a third DC-DC converter (26) including an input side to which the output side of the first DC-DC converter (22) is connected and an output side to which an auxiliary battery (18) for supplying power to accessories (32) of the vehicle (11) is connected, the method comprising:
controlling an output power of either the second DC-DC converter (24) or the third DC-DC converter (26) so that a voltage on the output side of the first DC-DC converter (22) becomes a predetermined value.

8. A non-transitory storage medium storing a program causing a computer to execute a power generation control process in a vehicle (11),
the vehicle (11) including
a first DC-DC converter (22) including an input side to which a solar panel (14) mounted on the vehicle (11) is connected,
a second DC-DC converter (24) including an input side to which an output side of the first DC-DC converter (22) is connected and an output side to which a drive battery (16) for driving the vehicle (11) is connected, and
a third DC-DC converter (26) including an input side to which the output side of the first DC-DC converter (22) is connected and an output side to which an auxiliary battery (18) for supplying power to accessories (32) of the vehicle (11) is connected,
the power generation control process comprising:
controlling an output power of either the second DC-DC converter (24) or the third DC-DC converter (26) so that a voltage on the output side of the first DC-DC converter (22) becomes a predetermined value.
